# EUROPÄISCHE PATENTSCHRIFT

(11) **EP 3 356 129 B1**
(45) Veröffentlichungstag und Bekanntmachung des Hinweises auf die Patenterteilung: **03.08.2022**
(21) Anmeldenummer: 16774949.8
(22) Anmeldetag: 30.09.2016
(51) Int. Cl.: B30B 15/06

(54) **EIN- ODER MEHRETAGENHEIZPRESSE, VERFAHREN ZUR HERSTELLUNG EINES PRESSPOLSTERS**
SINGLE- OR MULTI-LEVEL HOT PRESS, METHOD FOR PRODUCING A PRESS PAD
PRESSE CHAUFFANTE À UN OU PLUSIEURS ÉTAGES, PROCÉDÉ DE FABRICATION D'UN COUSSINET DE PRESSE

(30) Priorität: 02.10.2015 DE 202015006923 U
(43) Veröffentlichungstag der Anmeldung: 08.08.2018
(73) Patentinhaber: Hueck Rheinische GmbH, 41747 Viersen (DE)
(72) Erfinder: ESPE, Rolf, 44795 Bochum (DE)
(74) Vertreter: Bauer, Dirk
(86) Internationale Anmeldenummer: PCT/EP2016/073406
(87) Internationale Veröffentlichungsnummer: WO 2017/055535

(56) Entgegenhaltungen:
- DE-A1- 2 627 442
- DE-A1-102005 027 073
- DE-A1-102013 100 433
- US-A1- 2005 001 351

## Beschreibung

### Einleitung

Die Erfindung betrifft eine Ein- oder Mehretagenheizpresse mit mindestens einer Heizplatte, mindestens einem Pressblech und mindestens einem zwischen Heizplatte und Pressblech angeordneten Presspolster, das ein Trägermaterial in Form eines Metallgewebes und eine Polsterschicht, bestehend aus einem FKM-Kautschukmaterial, aufweist.

Darüber hinaus betrifft die Erfindung ein Verfahren zur Herstellung eines Presspolsters für eine Ein- oder Mehretagenheizpresse mit mindestens einer Heizplatte und einem Pressblech, wobei das Presspolster zwischen der Heizplatte und dem Pressblech angeordnet ist und ein Trägermaterial in Form eines Metallgewebes und eine Polsterschicht, bestehend aus einem FKM-Kautschukmaterial, aufweist.

### Stand der Technik

Derartige Presspolster können für den Einsatz in verschiedenen Pressenanlagen, z.B. in Mehretagenpressen mit Hochdruck oder in Einetagen-Kurztaktpressen mit Niederdruck verwendet werden. In den Mehretagenpressen werden üblicherweise unter hohen spezifischen Pressdrücken Kunststofflaminate aus mehreren Papierlagen, die mit Duroplastharzen imprägniert sind, hergestellt. In Mehretagenpressen werden auch bei niedrigeren Pressdrücken Spanplatten oder MDF- oder HDF-Platten mit bedruckten, dekorativen oder unifarbenen Edelzellstoffpapieren, die ebenfalls mit Duroplastharzen imprägniert sind, beschichtet. Die Beschichtung der Span-, MDF- oder HDF-Platten mit Kunstharzfilmen erfolgt aber in der Regel in Einetagen- oder so genannten Kurztaktpressen. Der Name Kurztaktpresse steht für relativ kurze Presszeiten unter Druck und Temperatur, wobei die Entformung des Plattenmaterials in heißem Zustand erfolgt.

Die mit Melamin-/Formaldehyd-Kondensationsharzen imprägnieren Edelzellstoffpapiere bilden unter Druck und Temperatur feste und irreversible Oberflächen aus und nehmen dabei die entsprechende Oberflächenstruktur und den Glanzgrad der eingesetzten metallischen Pressbleche an. Die Presspolter haben bei der Beschichtung von Holzwerkstoffplatten mit Duroplastharzfilmen eine wichtige Funktion, da sonst keine einwandfreien Oberflächen ausgebildet werden können. Sie sorgen für eine gleichmäßige Druckverteilung und einen konstanten Temperaturfluss. Während der Beschichtung in der Presse sind die Duroplastharze zunächst niedrigviskos schmelzbar und fließfähig und vernetzen dann zu unlöslichem, unschmelzbarem, hartem und abriebfestem Kunststoff. Diese Art der Vernetzung des Kunststoffs nennt man Polykondensation, wobei Wasser und Formaldehyd entstehen. Das bei der Kondensationsreaktion entstehende Wasser und Formaldehyd kann nicht dampfförmig frei werden, da der höhere Pressdruck, der über dem Dampfdruck des Wassers liegt, diese beiden Gasprodukte in die Filmschicht und in die Trägerplatte, d.h. das Holzwerkstoffmaterial, drückt. Daher benötigt man einen gleichmäßig verteilten Pressdruck über die gesamte Oberfläche des zu beschichtenden Materials. Diese Funktion wird von den Presspolstern übernommen.

Die Presspolster müssen den hohen Temperaturen, die in den Pressenanlagen vorherrschen, standhalten können. Darüber hinaus müssen sie die Wärme schnell von der Heizplatte auf das Pressblech und anschließend die Pressgutoberfläche weiterleiten. Darüber hinaus müssen die Presspolster selbst den hohen Pressdrücken standhalten, ohne ihre Polstereigenschaften, d.h. Rückstelleigenschaften, zu verlieren oder gar zerstört zu werden.

In den Pressenanlagen liegen häufig geometrische bzw. maßliche Unvollkommenheiten dahingehend vor, dass die Heizplatten und/oder die Pressbleche jeweils nicht exakt planparallel zueinander ausgerichtet und/oder ihre Oberflächen selbst nicht exakt eben sind. Bei größeren Abweichungen von der idealen geometrischen Konstellation (vollkommene Planparallelität und Ebenheit der Oberflächen von Pressblechen und Heizplatten) sind Spezialpolster erforderlich, die über ihre Fläche eine unterschiedliche Dicke aufweisen, um die Maßabweichungen in der Presse ausgleichen zu können.

Presspolster sind in der Regel textile Gewebe, die mit den unterschiedlichsten Materialien ausgestattet sind und über eine gleichmäßige Dicke über ihre gesamte Fläche verfügen. In der Praxis sind verschiedene Ausführungsformen vorhanden, die nur zum Teil den gewünschten Anforderungen der jeweiligen Pressenanlage gerecht werden können:
Ein gattungsgemäßes Presspolster gemäß der DE-B-23 19 593 weist ein Metallgewebe auf, das vollständig mit einem unvernetzten Silikonharz in Elastomerform beschichtet wird, wobei die Aushärtung bzw. Vernetzung nach der Beschichtung in einem Trockenkanal erfolgt und die jeweiligen Oberflächen aufwendig gesondert beschichtet werden müssen.

In der DE 90 17 587 U1 wird ein Presspolster beschrieben, bei dem es sich um ein flexibles Polstergewebe handelt, das aus einem aromatischen Polyamidgarn, gemischt mit anderen Garnmaterialien, besteht. Das textile Gewebe soll, bezogen auf das Gesamtgewicht des Presspolsters, Metallfäden in einem Anteil zwischen 0 Gew.-% und 70 Gew.-% enthalten, damit die Wärmeleitfähigkeit auf einen erforderlichen Wert eingestellt werden kann.

Aus der EP 0 713 762 A2 ist ein Presspolster für Hoch- und Niederdruckpressen bekannt, welches verschiedene Materialien aufweist, nämlich z.B. Garn aus aromatischem Polyamid mit Metallfäden, Metallfäden, hitzebeständiges Filament aus Gummi oder einer Gummimischung, hitzebeständiges Filament aus Silikon oder Silikonmischungen und deren Mischungen mit und ohne Metallfäden.

Zum weiteren Stand der Technik zählt das Presspolster aus der EP 0 725 949 B1, bei dem die Kettfäden und/oder die Schussfäden ein Silikonelastomer aufweisen, das in dem Gewebe beispielsweise in Form von Vollfäden oder in Form von mit Silikon ummanteltem Metalldraht enthalten sein kann.

Weiterhin ist ein ähnliches Presspolster aus der EP 1 136 248 A1 bekannt, wobei das Gewebe einen wesentlichen Anteile eines Fluorelastomers und/oder eines Silikon-Fluorelastomers aufweist. Alternativ ist dabei vorgesehen, dass das Gewebe einen wesentlichen Anteil eines Blend-Elastomers aufweist, das durch die Vernetzung einer Mischung aus einem Silikonkautschuk und einem Fluorkautschuk oder einem Silikon-Fluorkautschuk hergestellt ist. Die beschriebenen Elastomerarten sind dabei als Fadenmaterial ausgebildet und zu einem entsprechenden Gewebe ausgestaltet, welches als Kett- oder Schussfäden vernetzte Metallfäden aufweist. Ein weiteres Presspolster dieser Art, dessen Gewebe ebenfalls Silikonelastomer enthält, wird in der DE 10 2013 100 433 A1 beschrieben.

In der EP 1 300 235 B1 wird ein Presspolster beschrieben, das einen textilen Träger mit Fäden aufweist, von denen wenigstens ein Teil Wärmeleitfäden bildet, die entweder direkt oder über Kontakt mit anderen Wärmeleitfäden eine Wärmeübertragung von einer Außenseite zu der anderen Außenseite des Presspolsters bewirken, wobei der Träger eine Polsterschicht aus einem gummielastischen Werkstoff im Bereich der sich kreuzenden Fäden aufweist. Das bekannte Presspolster ist dadurch gekennzeichnet, dass die Dicke der Polsterschicht geringer ist als die des Trägers und die Polsterschicht derart in den Träger eingebettet ist, dass die Wärmeleitfäden auf beiden Außenseiten des Presspolsters über die Polsterschicht vorstehen. Des Weiteren ist beschrieben, dass die Polsterschickt mittels eines Rakelprozesses in das textile Gewebe eingebracht wird.

Außerdem wird in der EP 1 300235 B1 darauf hingewiesen, dass durch den beidseitigen Überstand der Wärmeleitfäden über die Polsterschicht ein direkter und unter dem Pressendruck flächenhafter Kontakt zu den Heizplatten einerseits und zu den Pressblechen andererseits entstehen würde. Dadurch würde der Wärmeübergang wesentlich beschleunigt. Es hat sich aber unter dem Aspekt der Press- und Harztechnologie gezeigt, dass derartige Presspolster mit gleichmäßiger Gewebestärke zu Problemen bei der Oberflächenausbildung des Duroplastharzes führen. Speziell bei der Herstellung von Fußbodenplatten mit HDF-Trägermaterial (High Density Fibreboards) mit Rohdichten von 800 kg/m³ bis 1.000 kg/m³ sind Presspolster erforderlich, die anlagenspezifisch ausgebildet sind. Das bedeutet, dass derartige Presspolster, falls notwendig, unterschiedliche Wärmedurchgangswerte über ihre Fläche einerseits und eine ebenso über die Fläche differierende Polsterwirkung andererseits aufweisen müssen.

Schließlich geht aus der US 2005/0001351 A1 ein Presspolster gemäss dem Oberbegriff des Anspruchs 1 hervor, das sich aus einzelnen Schichten zusammensetzt. Eine Mittelschicht aus einem Gummimaterial wird auf beiden Seiten von jeweils einer Oberflächenschicht abgedeckt, wobei die Verbindung der Gummischicht mit den Oberflächenschichten durch zweistufige Vulkanisierung erfolgt. Das bekannte Presspolster kann auch mehrere Mittelschichten umfassen, die dann jeweils von zwei Oberflächenschichten abgedeckt sind.

Allen vorstehend beschriebenen bekannten Presspolstern ist es gemein, dass sie auf entsprechenden Webmaschinen hergestellt und im Fall der DE-B-23 19 593 sowie der EP 1 300 235 anschließend mit einem im Verarbeitungszustand streichfähigen Polstermaterial beschichtet werden. Das bedeutet, dass diese bekannten Presspolster über eine über die gesamte Polsterfläche konstante Polsterdicke verfügen und nur sehr eingeschränkt den technischen Gegebenheiten der Pressenanlage angepasst werden können. Insbesondere eine Anpassung an die individuelle geometrische Situation einer jeweiligen Pressenanlage ist kaum möglich. Bei Pressenanlagen mit unterschiedlichen Dickentoleranzen über die Fläche verteilt werden die bekannten Presspolster unterschiedlich stark verformt, so dass die auf das Pressblech und das Pressgut ausgeübten Pressdrücke über die Fläche des Presspolsters unterschiedlich sind. Die Folge davon sind vorzeitiger Polsterverschleiß und qualitativ minderwertige Oberflächen an dem beschichteten Pressgut.

Ein weiterer Nachteil der bekannten Presspolster ist in ihrer Befestigung in der Pressenanlage, d.h. insbesondere an den Heizplatten bzw. den Pressblechen, zu sehen. Typischerweise werden bekannte Presspolster mit aufwendigen Spannvorrichtungen in den Pressenanlagen fixiert. Dabei sind sie sehr hohen Zugspannungen, die zwangsläufig auftreten, ausgesetzt. Dies führt nicht selten zu vorzeitigem Gewebeverschleiß und Einreißen speziell bei den so genannten Oberpolstern. In den Pressenanlagen werden auch sehr häufig die Pressbleche gewechselt, bedingt durch die unterschiedlichen Oberflächen, die zur Ausbildung der Oberflächen der Duroplastharze notwendig sind. Dabei bleiben die Polster in der Regel in den Anlagen fixiert. Allerdings kommt es, bedingt durch das Gewicht der Polster, speziell beim so genannten Oberblech, zu einem großen Durchhang der Polster. Beim erneuten Einfahren der Pressbleche in die Pressenanlage kommt es dann nicht selten zu mechanischen Beschädigungen der Presspolster, die je nach Schwere der Beschädigung durch neue Presspolster ersetzt werden müssen. Ein hoher Polsterverbrauch ist die Folge davon, wobei die weitere Benutzung beschädigter Presspolster zu Oberflächenfehlern bei den beschichteten Holzwerkstoffplatten führen würde.

### Aufgabe

Der Erfindung liegt die Aufgabe zugrunde, eine Ein- oder Mehretagenheizpresse und ein Verfahren zur Herstellung eines Presspolsters für eine solche Presse vorzuschlagen, mit der bzw. dem auch gesteigerte Anforderungen bei technisch innovativen Pressanwendungen erfüllt werden können. Insbesondere soll eine längere Einsatzdauer der Presspolster erzielt sowie eine Anpassung an die individuellen maßlichen und geometrischen Eigenschaften der jeweiligen Presse erreicht werden. Außerdem ist es wünschenswert, wenn die Fixierung eines Presspolsters in der Ein- oder Mehretagenheizpresse vereinfacht würde.

### Lösung

Ausgehend von einer Ein- oder Mehretagenheizpresse der eingangs beschriebenen Art wird diese Aufgabe erfindungsgemäß durch die Merkmale der Ansprüche 1 und 11, das heisst, dass das Presspolster in einem solchen Zustand in die Ein- oder Mehretagenheizpresse eingebracht ist, in dem die Polsterschicht ein teilvernetztes bzw. teilausvulkanisiertes FKM-Kautschukmaterial aufweist, und dass die Endvernetzung bzw. Endvulkanisation des Presspolsters in der Ein- oder Mehretagenheizpresse unter Druck und Temperatur zwischen Heizplatte und Pressblech stattfindet. Damit kann sich das Presspolster den Gegebenheiten, insbesondere der individuellen maßlichen und geometrischen Situation der Pressenanlage, anpassen.

Die Polsterschicht besteht somit bei der Auslieferung des Presspolsters durch den Hersteller zunächst aus nur teilvernetztem bzw. teilausvulkanisiertem Fluorkautschuk, insbesondere FKM nach DIN1629 und ASTM D 1418. Es ist in dieser Form nicht für den Gebrauch in einer Pressenanlage geeignet. Weiterhin besteht die Kerninnenlage des Presspolsters aus einem Metalldrahtgewebe, um die Wärmeübertragung auf einem hohen Niveau sicherzustellen. Die Endherstellung des Presspolsters erfolgt somit erfindungsgemäß erst in der jeweiligen Pressenanlage, d.h. nicht mehr in den Fertigungsstätten des Herstellers, sondern erst bei dessen Kunden. Ein erfindungsgemäß hergestelltes Presspolster ist für die jeweilige Pressenanlage maßgeschneidert und sinnvollerweise auch nur in dieser und auch nur in der jeweiligen Position (z.B. Oberpolster oder Unterpolster) einsetzbar. Da der eingesetzte Fluorkautschuk zunächst nur teilvernetzt ist, geschieht die Endvernetzung oder Ausvulkanisierung unter Druck und Temperatur in der jeweiligen Pressenanlage. Dabei können häufig die bei einer derartigen Pressenanlage im regulären Betrieb üblichen Druck- und Temperaturwerte realisiert werden. Abweichungen von diesen Werten nach oben oder unten sind aber gleichfalls ohne weiteres möglich, falls für den Vernetzungs- bzw. Vulkanisationsprozess nötig. Typischerweise findet zu dem Zeitpunkt, in dem die Endvernetzung oder Ausvulkanisierung des Presspolsters stattfindet, kein eigentlicher Beschichtungsvorgang in der Presse statt, d.h. in der Presse befindet sich kein Pressgut. Es ist aber auch denkbar, ein "Dummymaterial" zwischen den sich gegenüber liegenden Pressblechen einzusetzen, um eine gleichmäßige Druckverteilung zu gewährleisten und einen Kontakt der Pressbleche miteinander zu verhindern.

Das nur teilvernetzte bzw. teilausvulkanisierte FKM-Kautschukmaterial ist zwar unter Druck und Temperatur fließfähig, besitzt bei Raumtemperatur hingegen eine solche Viskosität, dass es zusammen mit dem mittigen Metallgewebe in Form einer oberen und unteren Schicht problemlos gehandhabt und das Presspolster als Einheit ("Sandwich") in die Pressenanlage eingebracht werden kann. Während des Vorgangs der Endvernetzung oder Ausvulkanisierung unter Druck und Temperatur kann das FKM-Kautschukmaterial horizontal betrachtet in Zonen fließen, in denen sich gegenüberliegende Pressbleche weiter voneinander entfernt als in anderen Bereichen. Es wird auf diese Weise in den vorgenannten Zonen "mehr" Polsterschicht ausgebildet, d.h. ein insgesamt dickeres Presspolster erzeugt. Diese Presspolstereigenschaft variierender Dicke ist für die spätere Beschichtung der Holzwerkstoffplatten besonders wichtig, um eine gleichmäßige Druckverteilung und damit eine hohe Oberflächengüte zu erzielen.

Da das FKM-Kautschukmaterial eine gute Haftneigung zu Metallen aufweist, kann während der Endvernetzung bzw. Ausvulkanisierung in der Pressenanlage eine Haftschicht zur Heizplatte oder zum Pressblech ausgebildet werden. Je nach Anforderung kann das ausgebildete Presspolster mit dem Pressblech direkt an der Heizplatte fixiert oder mittels einer Trennfolie zwischen Pressblech und Presspolster das Presspolster nur an der Heizplatte fixiert werden. Das Metallgewebe des Presspolsters kann zwischen einer oberen und einer unteren Elastomerschicht in Form einer FKM-Folie eingelagert, d.h. dort angeordnet, werden und verbindet sich bei dem Vernetzungs- bzw. Vulkanisierungsvorgang in der Pressenanlage mit den Elastomerschichten.

Bei der Ausbildung der Melaminharz-Oberflächen werden immer diffizilere Prägestrukturen eingesetzt, die nicht nur die Melaminharzschicht selbst, sondern zum Teil auch die Oberschicht der HDF-Platten prägen müssen. Bei den heute gewünschten kurzen Presszeiten kommt es bei unterschiedlichen Dickentoleranzen und damit verbundenen Pressdrücken über der Fläche der Presse betrachtet, innerhalb einer Platte zur Harzflussstörungen, die dann zu fehlerhaft ausgeprägten Oberflächen führen. Das Presspolster wirkt diesen Umständen entgegen, da es bereits bei der Herstellung die verschiedenen Dickentoleranzen innerhalb des Pressensystems, Pressplatte und Pressblech, ausgleicht und gegebenenfalls unterschiedlich erforderliche Wärmeleitfähigkeiten berücksichtigen kann.

Vorzugsweise sollte der Einsatz von FKM-Kautschukmaterial in Form von Plattenmaterial oder Folienmaterial erfolgen, das beidseitig des späteren mittleren Metallgewebes (Trägermaterial) angeordnet und als Paket ("Sandwich") in die Pressenanlage eingebracht wird. Der Herstellungsprozess wird auf diese Weise deutlich vereinfacht.

Der Einsatz von FKM-Kautschukmaterial führt zu einer extrem hohen Dauertemperaturbelastbarkeit, die über sämtlichen derzeit angewandten Presstemperaturen liegt. Es finden auch im Dauereinsatz keine Zersetzungsprozesse des FKM-Kautschukmaterials statt, wie sie z.B. bei Silikomelastomeren auftreten, bei denen unter Luftabschluss eine Depolymerisation stattfinden kann. Setzt eine solche Depolymerisation ein, so ist diese auch mit einem Abfall der mechanischen Festigkeit verbunden, insbesondere die Shorehärte ist davon betroffen, die auch verantwortlich für die Polsterwirkung eines Presspolsters ist.

FKM-Kautschukmaterial kann unterschiedlich vernetzt bzw. vulkanisiert werden. Ein bekanntes Verfahren ist die diaminische Vernetzung, die wegen der guten Haftung zwischen dem aus dem Kautschuk erzeugten Elastomermaterial und Metallen sehr häufig eingesetzt wird. Ein moderneres Vernetzungsverfahren ist der bisphenolische Mechanismus, auch Dihydroxi-Mechanismus genannt, bei dem Bisphenol AF und ein quarternäres Phosphoniumsalz als Vernetzerkomponenten eingesetzt werden. Es handelt sich um einen nukleophilen Substitutionsmechanismus. Im Vergleich zur diaminischen Vernetzung werden bessere Beständigkeiten gegen Hydrolyse und höhere Temperaturbeständigkeit sowie eine Verbesserung beim Druckverformungsrest erzielt. Eine weitere Vernetzungsart ist die peroxydische Vernetzung, auch Triazin-Verfahren gekannt, wobei freie Radikale für die Vernetzung verantwortlich sind. Die peroxydische Vernetzung ist besonders wichtig, wenn FKM-Kautschuke zum Einsatz kommen, die Perfluormethylvinylether (PMVE) enthalten, da die beiden ionischen Mechanismen durch Angriff auf das PMVE zur Zerstörung der Polymerketten führen können. In wässrigen und nicht-wässrigen Eletrolyten sind peroxydische Fluorelastomere Produkten anderer Vernetzungmechanismen überlegen. Die Temperaturbeständigkeit ist ähnlich wie bei den bisphenolisch vernetzten Materialien.

Das Metallstützgewebe in den Polstern ist einerseits für die Wärmeübertragung von der Heizplatte der Pressenanlage auf das Pressblech und andererseits für die Formathaltigkeit des Polsters verantwortlich (mechanische Festigkeit). Die Wärmeleitfähigkeit des Presspolsters kann beispielsweise durch die Dicke der Kett- oder Schussfäden, alternativ bzw. ergänzend weiterhin durch unterschiedliche Metallmaterialien mit speziellen Wärmeleitkennahlen (Kupfer, Messing, Bronze, Stahl, Edelstahl, etc.) bei den Fäden hergestellt werden.

Darüber hinaus ist es erfindungsgemäß möglich, bei den Presspolstern auch eine über die Fläche des Presspolsters unterschiedliche, d.h. partiell unterschiedliche, Wärmeleitfähigkeit einzustellen. Hierzu können z.B. an einer gewünschten Stelle oder in einem gewünschten Bereich die Kettfäden und/oder Schussfäden in deren Materialzusammensetzung (Metallzusammensetzung) oder in der Fadenstärke und/oder Fadendichte variieren. Dadurch ergeben sich im Presspolster Zonen mit veränderten Wärmeübertragungsraten, die sich auf den erforderlichen Harzfluss der zu beschichtenden Oberflächen positiv auswirken, so dass Oberflächenfehler vermieden werden können.

Die Erfindung weiter ausgestaltend ist vorgesehen, dass der Polsterschicht, im vorliegenden Fall dem FKM-Kautschukmaterial, bei dessen Herstellung Füllmaterialien mit wärmeleitfähigen Eigenschaften beigemischt werden. Hier kommen insbesondere Metallpulver oder Metallfasern, aber auch Karbonpulver oder Karbonfasern oder beispielsweise Quarzsand in Frage. Es sind aber auch andere Materialien denkbar, wobei vorzugsweise deren Wärmeleitfähigkeit größer sein sollte als die des Polstermaterials. Der Anteil der wärmeleitenden Füllmaterialien richtet sich nach den angestrebten bzw. erforderlichen Wärmeleitfähigkeitswerten des gesamten Presspolsters.

Sofern das Presspolster unmittelbar an der Heizplatte und/oder dem Pressblech fixiert ist, wird der Wärmefluss bei jedem Pressvorgang gegenüber dem Stand der Technik reduziert. Es treten nämlich während des geöffneten Zustands der Pressenanlage keine Verzögerungen im Wärmefluss, bedingt durch Luftschichten zwischen dem Presspolster und der Heizplatte und/oder dem Pressblech auf, sondern unmittelbar nach Entnahme des fertig beschichteten Pressguts kann der Wärmeverlust in dem Pressblech wieder ausgeglichen werden, so dass die für den nächsten Beschichtungsvorgang erforderlichen Temperaturen schneller wieder zur Verfügung stehen. Außerdem weisen die Presspolster aufgrund ihrer Endherstellung in der Pressenanlage keinen Längen- und/oder Breitenschrumpf bzw. auch keine unerwünschten Ausdehnungen im Pressenbetrieb auf.

### Ausführungsbeispiel

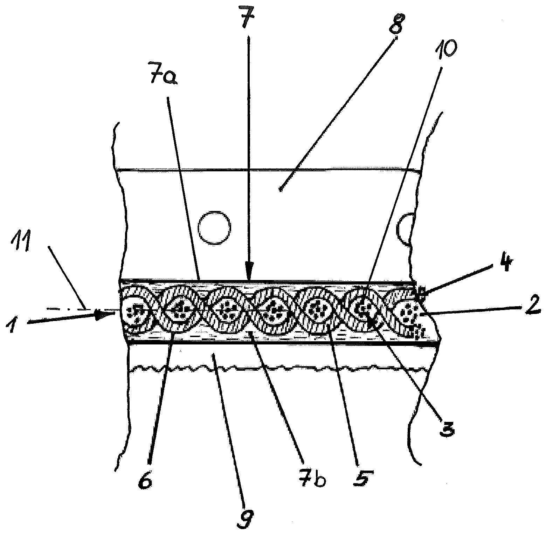

In der beigefügten Zeichnung wird die Erfindung anhand eines Ausführungsbeispiels im Folgenden näher erläutert. Die einzige Zeichnungsfigur zeigt einen Vertikalschnitt durch einen Teil einer im Übrigen nicht dargestellten, aber aus dem Stand der Technik bekannten Pressenanlage, und zwar durch eine Heizplatte 8, ein Presspolster 1 sowie ein Pressblech 9. Das Presspolster 1 ist in bekannter Weise zwischen der Heizplatte 8 und dem Pressblech 9 angeordnet, wobei sämtliche drei vorgenannte Bauteile parallel zueinander, und zwar horizontal, ausgerichtet sind. Unterhalb des Pressblechs 9 befindet sich im Betriebszustand der Ein- oder Mehretagenheizpresse das zu beschichtende Pressgut, welchem die konturierte untere Oberfläche des Pressblechs 9 zugewandt ist. Bei dem Pressblech 9 handelt es sich um ein so genanntes "Oberblech" und bei dem Presspolster 1 um ein so genanntes "Oberpolster".

Das Presspolster 1 weist als Trägermaterial 2 ein Metallgewebe auf, das in Tuchbindung (Leinwandbindung) ausgebildet ist. Das Trägermaterial 2 besitzt senkrecht zur Zeichnungsebene verlaufende Schussfäden 3 aus vernetzten Metalldrähten 10. Die Schussfäden 3 binden mit Kettfäden 4 und 5 ab, die zwischen den Schussfäden 3 jeweils die Seiten des Presspolsters 1 wechseln und jeweils oberhalb und unterhalb der Schussfäden Verkröpfungen 6 ausbilden. Zu einer Mittelebene 11 des Presspolsters 1 ist symmetrisch eine Polsterschicht 7 aus FKM-Kautschuk ausgebildet. Die Polsterschicht 7 setzt sich zusammen aus einer oberen Polsterschicht 7a und einer unteren Polsterschicht 7b die miteinander stoffschlüssig durch das Trägermaterial 2 hindurch verbunden sein können. Lufteinschlüsse in dem Presspolster 1 im Bereich des Trägermaterials 2 sind möglich, ebenso aber auch eine völlige Gasfreiheit im fertigen Zustand. Das Presspolster 1 haftet aufgrund der Adhäsionseigenschaften zwischen dem FKM-Kautschukmaterial der oberen Polsterschicht 7a und der metallischen Heizplatte 8 fest an letzterer an, so dass es keinerlei weiterer Fixierung in der Pressenanlage bedarf. Das Pressblech 9, an dem das Presspolster 1 nicht anhaftet, weil während der Endvernetzung in der Pressenanlage zwischen dem Presspolster 1 und dem Pressblech 9 eine Trennfolie angeordnet war (die später wieder entfernt wurde), kann daher ohne weiteres gewechselt werden, wenn ein Pressblech 9 mit einer anderen Prägestruktur, d.h. Oberflächenkontur, gewünscht ist. Während eines derartigen Wechselvorgangs hängt das Presspolster 1 nicht von der Heizplatte 8 herunter.

### Bezugszeichenliste

- 1: Presspolster
- 2: Trägerschicht
- 3: Schussfaden
- 4: Kettfaden
- 5: Kettfaden
- 6: Verkröpfung
- 7: Polsterschicht
- 7a: obere Polsterschicht
- 7b: untere Polsterschicht
- 8: Heizplatte
- 9: Pressblech
- 10: Metalldraht
- 11: Mittelebene

## Patentansprüche

1. Ein- oder Mehretagenheizpresse mit mindestens einer Heizplatte (8), mindestens einem Pressblech (9) und mindestens einem zwischen Heizplatte (8) und Pressblech (9) angeordneten Presspolster (1), das ein Trägermaterial (2) in Form eines Mettallgewebes und eine Polsterschicht (7), bestehend aus einem FKM-Kautschukmaterial, aufweist, **dadurch gekennzeichnet, dass** das Presspolster (1) in einem solchen Zustand in die Ein- oder Mehretagenheizpresse eingebracht ist, in dem die Polsterschicht (7) ein teilvernetztes bzw. ein teilausvulkanisiertes FKM-Kautschukmaterial aufweist und dass die Endvernetzung bzw. Endvulkanisation des Presspolsters in der Ein- oder Mehretagenheizpresse unter Druck und Temperatur zwischen der Heizplatte (8) und dem Pressblech (9) stattfindet, damit sich das Presspolster (1) den Gegebenheiten der Pressenanlage anpassen kann.

2. Ein- oder Mehretagenheizpresse nach Anspruch 1, **dadurch gekennzeichnet, dass** das Metallgewebe aus unterschiedlichen Metalldrahtmaterialien in Kett- und/oder Schussfadenrichtung gebildet ist.

3. Ein- oder Mehretagenheizpresse nach Anspruch 1 oder 2, **dadurch gekennzeichnet, dass** das Metallgewebe partiell aus unterschiedlichen Metalldrahtmaterialien in Kett- und/oder Schussfadenrichtung gebildet ist.

4. Ein- oder Mehretagenheizpresse nach einem der Ansprüche 1 bis 3, **dadurch gekennzeichnet, dass** die Kett- und/oder Schussfadendichte innerhalb des Metallgewebes so eingestellt ist, dass unterschiedliche Wärmeleitfähigkeitszonen gebildet sind.

5. Ein- oder Mehretagenheizpresse nach einem der Ansprüche 1 bis 4, **dadurch gekennzeichnet, dass** die Polsterschicht (7) einen Perfluorkautschuk (PFKM) aufweist.

6. Ein- oder Mehretagenheizpresse nach einem der Ansprüche 1 bis 5, **dadurch gekennzeichnet, dass** die Polsterschicht einen Tetrafluorethylen-/- propylenkautschuk (FEPM) aufweist.

7. Ein- oder Mehretagenheizpresse nach einem der Ansprüche 1 bis 6, **dadurch gekennzeichnet, dass** die Polsterschicht (7) einen Fluor-Silikonkautschuk aufweist.

8. Ein- oder Mehretagenheizpresse nach einem der Ansprüche 1 bis 7, **dadurch gekennzeichnet, dass** die Polsterschicht einen Silikonkautschuk aufweist.

9. Ein- oder Mehretagenheizpresse nach einem der Ansprüche 1 bis 8, **dadurch gekennzeichnet, dass** die Polsterschicht (7) ein Copolymer aus Silikonkautschuk und Fluorsilikonkautschuk aufweist.

10. Ein- oder Mehretagenheizpresse nach einem der Ansprüche 1 bis 9, **dadurch gekennzeichnet, dass** das Presspolster eine Haftschicht zur Heizplatte und/oder zum Pressblech ausbildet, insbesondere dass das Presspolster sich bei geöffneter Ein- oder Mehretagenheizpresse nicht von der Heizplatte und/oder dem Pressblech (9) ablöst.

11. Verfahren zur Herstellung eines Presspolsters (1) für eine Ein- oder Mehretagenheizpresse mit mindestens einer Heizplatte (8) und mindestens einem Pressblech (9), wobei das Presspolster (1) zwischen der Heizplatte (8) und dem Pressblech (9) angeordnet ist und ein Trägermaterial (2) in Form eines Metallgewebes und eine Polsterschicht (7) bestehend aus einem FKM-Kautschukmaterial aufweist, **dadurch gekennzeichnet, dass** das Presspolster (1) in einem solchen Zustand in die Ein- oder Mehretagenheizpresse eingebracht wird, in dem die Polsterschicht (7) ein teilvernetztes bzw. teilausvulkanisiertes FKM-Kautschukmaterial aufweist und dass die Endvernetzung bzw. Endvulkanisation des Presspolsters (1) in der Ein- oder Mehretagenheizpresse unter Druck und Temperatur zwischen der Heizplatte (8) und dem Pressblech (9) stattfindet, damit sich das Presspolster (1) den Gegebenheiten der Pressenanlage anpassen kann.

12. Verfahren nach Anspruch 11, **dadurch gekennzeichnet, dass** während der Endvernetzung bzw. Endvulkanisation zwischen dem Pressblech (9) und dem Presspolster (1) eine Trennfolie angeordnet wird, die eine Fixierung des Presspolsters (1) an dem Pressblech (9) verhindert.

13. Verfahren nach Anspruch 11 oder 12, **dadurch gekennzeichnet, dass** im Zuge der Endvernetzung bzw. Endvulkanisation die Polsterschicht des Presspolsters (1) mit der Heizplatte (8) unter Ausbildung einer Haftschicht fixiert wird.

## Claims

1. A single-stage or multi-stage heat press with at least one heating plate (8), at least one press plate (9) and at least one press pad (1) disposed between the heating plate (8) and the press plate (9) and which includes a carrier material (2) in the form of a metallic fabric and a layer of padding (7) consisting of a FKM rubber material, **characterized in that** the press pad (1) is introduced into the single-stage or multi-stage heat press in a condition in which the layer of padding (7) includes a partially cross linked or a partially vulcanized FKM rubber material, and **in that** the final cross linking or final vulcanization of the press pad is carried out in the single-stage or multi-stage heat press between the heating plate (8) and the press plate (9) using pressure and heat in a manner such that the press pad (1) can adapt to the characteristics of the press equipment.

2. The single-stage or multi-stage heat press as claimed in claim 1, **characterized in that** the metallic fabric is formed by different metallic wire materials in the warp filament direction and/or in the weft filament direction.

3. The single-stage or multi-stage heat press as claimed in claim 1 or claim 2, **characterized in that** part of the metallic fabric is formed by different metallic wire materials in the warp filament direction and/or in the weft filament direction.

4. The single-stage or multi-stage heat press as claimed in one of claims 1 to 3, **characterized in that** the warp filament density and/or the weft filament density is adjusted within the metallic fabric in a manner such that different zones of thermal conductivity are formed.

5. The single-stage or multi-stage heat press as claimed in one of claims 1 to 4, **characterized in that** the layer of padding (7) includes a perfluorinated rubber (PFKM).

6. The single-stage or multi-stage heat press as claimed in one of claims 1 to 5, **characterized in that** the layer of padding includes a tetrafluoroethylene propylene rubber (FEPM).

7. The single-stage or multi-stage heat press as claimed in one of claims 1 to 6, **characterized in that** the layer of padding (7) includes a fluorosilicone rubber.

8. The single-stage or multi-stage heat press as claimed in one of claims 1 to 7, **characterized in that** the layer of padding includes a silicone rubber.

9. The single-stage or multi-stage heat press as claimed in one of claims 1 to 8, **characterized in that** the layer of padding (7) includes a copolymer produced from silicone rubber and fluorosilicone rubber.

10. The single-stage or multi-stage heat press as claimed in one of claims 1 to 9, **characterized in that** the press pad forms a bonding layer for the heating plate and/or for the press plate, in particular **in that** the press pad does not separate from the heating plate and/or the press plate (9) when the single-stage or multi-stage heat press is open.

11. A method for producing a press pad (1) for a single-stage or multi-stage heat press, with at least one heating plate (8) and at least one press plate (9), wherein the press pad (1) is disposed between the heating plate (8) and the press plate (9) and includes a carrier material (2) in the form of a metallic fabric and a layer of padding (7) consisting of a FKM rubber material, **characterized in that** the press pad (1) is introduced into the single-stage or multi-stage heat press in a condition in which the layer of padding (7) includes a partially cross linked or partially vulcanized FKM rubber material and **in that** the final cross linking or final vulcanization of the press pad (1) is carried out in the single-stage or multi-stage heat press between the heating plate (8) and the press plate (9) using pressure and heat in a manner such that the press pad (1) can adapt to the characteristics of the press equipment.

12. The method as claimed in claim 11, **characterized in that** during the final cross linking or vulcanization, a release film is disposed between the press plate (9) and the press pad (1) which prevents the press pad (1) from fusing to the press plate (9).

13. The method as claimed in claim 11 or claim 12, **characterized in that** during final cross linking or final vulcanization, the layer of padding of the press pad (1) is secured to the heating plate (8) with the formation of a bonding layer.

## Revendications

1. Presse chauffante à un ou plusieurs étages comportant au moins une plaque chauffante (8), au moins une tôle de presse (9) et au moins un coussin de presse (1) disposé entre la plaque chauffante (8) et la tôle de presse (9) et qui présente un matériau support (2) sous forme d'un treillis métallique et une couche de rembourrage (7) composée d'un matériau à base de caoutchouc FKM, **caractérisée en ce que** le coussin de presse (1) est intégré dans la presse chauffante à un ou plusieurs étages dans un état dans lequel la couche de rembourrage (7) présente un matériau à base de caoutchouc FKM partiellement réticulé ou partiellement vulcanisé et que la réticulation finale ou la vulcanisation finale du coussin de presse a lieu dans la presse chauffante à un ou plusieurs étages sous pression et température entre la plaque chauffante (8) et la tôle de presse (9) afin que le coussin de presse (1) puisse s'adapter aux données de l'installation de presse.

2. Presse chauffante à un ou plusieurs étages selon la revendication 1, **caractérisée en ce que** le treillis métallique est constitué de différents matériaux en fil métallique dans le sens de la chaîne et/ou de la trame.

3. Presse chauffante à un ou plusieurs étages selon la revendication 1 ou 2, **caractérisée en ce que** le treillis métallique est constitué partiellement de différents matériaux en fil métallique dans le sens des fils de chaîne et/ou des fils de trame.

4. Presse chauffante à un ou plusieurs étages selon une des revendications 1 à 3, **caractérisée en ce que** la densité des fils de chaîne et/ou des fils de trame dans le treillis métallique est réglée de manière à former différentes zones de conductivité thermique.

5. Presse chauffante à un ou plusieurs étages selon une des revendications 1 à 4, **caractérisée en ce que** la couche de rembourrage (7) présente un caoutchouc perfluoré (PFKM).

6. Presse chauffante à un ou plusieurs étages selon une des revendications 1 à 5, **caractérisée en ce que** la couche de rembourrage présente un caoutchouc de tétrafluoroéthylène/propylène (FEPM).

7. Presse chauffante à un ou plusieurs étages selon une des revendications 1 à 6, **caractérisée en ce que** la couche de rembourrage (7) présente un caoutchouc silicone au fluor.

8. Presse chauffante à un ou plusieurs étages selon une des revendications 1 à 7, **caractérisée en ce que** la couche de rembourrage présente un caoutchouc silicone.

9. Presse chauffante à un ou plusieurs étages selon une des revendications 1 à 8, **caractérisée en ce que** la couche de rembourrage (7) présente un copolymère de caoutchouc silicone et de caoutchouc silicone au fluor.

10. Presse chauffante à un ou plusieurs étages selon une des revendications 1 à 9, **caractérisée en ce que** le coussin de rembourrage constitue une couche adhérente sur la plaque chauffante et/ou sur la tôle de presse, en particulier que le coussin de presse ne se détache pas de la plaque chauffante et/ou de la tôle de presse lorsque la presse chauffante à un ou plusieurs étages est ouverte.

11. Procédé de fabrication d'un coussin de presse (1) pour une presse chauffante à un ou plusieurs étages comportant au moins une plaque chauffante (8) et au moins une tôle de presse (9), le coussin de presse (1) étant disposé entre la plaque chauffante (8) et la tôle de presse (9) et un matériau support (2) sous forme d'un treillis métallique et une couche de rembourrage (7) composée d'un matériau à base de caoutchouc FKM, **caractérisé en ce que** le coussin de presse (1) est intégré dans la presse chauffante à un ou plusieurs étages dans un état dans lequel la couche de rembourrage (7) présente un matériau à base de caoutchouc FKM partiellement réticulé ou partiellement vulcanisé et que la réticulation finale ou la vulcanisation finale du coussin de presse (1) a lieu dans la presse chauffante à un ou plusieurs étages sous pression et température entre la plaque chauffante (8) et la tôle de presse (9) afin que le coussin de presse (1) puisse s'adapter aux données de l'installation de presse.

12. Procédé selon la revendication 11, **caractérisé en ce que**, pendant la réticulation finale ou la vulcanisation finale, il est disposé entre la tôle de presse (9) et le coussin de presse (1) un film séparateur qui empêche une fixation du coussin de presse (1) à la tôle de presse (9).

13. Procédé selon la revendication 11 ou 12, **caractérisé en ce que**, au cours de la réticulation finale ou de la vulcanisation finale, la couche de rembourrage du coussin de presse (1) est fixée à la plaque chauffante (8) en formant une couche adhérente.
